(19)

Europäisches
Patentamt
European
Patent Office
Office européen
des brevets

(11) **EP 2 750 469 A1**

(12) # EUROPEAN PATENT APPLICATION

published in accordance with Art. 153(4) EPC

(43) Date of publication:
**02.07.2014 Bulletin 2014/27**

(21) Application number: **12825253.3**

(22) Date of filing: **21.08.2012**

(51) Int Cl.:
**H04W 72/12** *(2009.01)*     **H04W 72/04** *(2009.01)*

(86) International application number:
**PCT/JP2012/071053**

(87) International publication number:
**WO 2013/027719 (28.02.2013 Gazette 2013/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.08.2011  JP 2011183025**

(71) Applicant: **NTT DOCOMO, INC.**
**Chiyoda-ku**
**Tokyo 100-6150 (JP)**

(72) Inventors:
• **OOKUBO, Naoto**
  **Tokyo 100-6150 (JP)**
• **OFUJI, Yoshiaki**
  **Tokyo 100-6150 (JP)**
• **ABETA, Sadayuki**
  **Tokyo 100-6150 (JP)**

(74) Representative: **HOFFMANN EITLE**
**Patent- und Rechtsanwälte**
**Arabellastrasse 4**
**81925 München (DE)**

(54)  **BASE STATION AND WIRELESS COMMUNICATION METHOD**

(57)     A base station 100 includes: a parameter control unit 103 configured to select either a normal control parameter used during normal time or an emergency control parameter used during an emergency where the number of voice calls to be handled increases from the number during normal time; and a scheduling unit 105 configured to schedule a PDSCH for a mobile station 200A based on either the normal control parameter or the emergency control parameter selected by the parameter control unit 103. The normal and emergency control parameters allow the number of voice calls processable by the base station 100 to change, and the emergency control parameter increases the number of processable voice calls to a number larger than that of the normal control parameter.

FIG. 2

EP 2 750 469 A1

## Description

### TECHNICAL FIELD

The present invention relates to a base station and a radio communication method for notifying a mobile station of allocation information by using a physical control channel, the allocation information indicating that a physical shared channel is allocated to the mobile station. Specifically, the present invention relates to a base station and a radio communication method which are capable of handling an increased number of voice calls when the number of voice calls suddenly increases, in an event such as a disaster.

### BACKGROUND ART

In Long Term Evolution (LTE) standardized in the 3rd Generation Partnership Project (3GPP), a radio resource to be allocated to a mobile station (UE) is selected in each sub-frame (Transmission Time Interval). Specifically, a base station (eNB) uses a scheduler to select a radio resource, more specifically, a physical shared channel (PDSCH) to be allocated to the mobile station. Then, the base station (eNB) uses a physical control channel (PDCCH) to notify the mobile station of radio resource allocation information (the number of resource blocks, locations and the like). Such a scheduling method is called Dynamic scheduling.

In Dynamic scheduling, due to an increase in overhead of the physical control channel, there is an upper limit to allocation information that can be multiplexed into the physical control channel, i.e., the number of mobile stations. In such a case as a voice call that has a small data size and should meet a severe requirement against transmission delay, in particular, the resources of the physical control channel can be used up even though the physical shared channel has plenty of resources.

To prevent such a situation, a scheduling method called Semi-persistent scheduling (SPS) is prescribed in the LTE as a scheduling method suitable for packets that have a small data size and should meet a severe requirement against transmission delay, such as the voice call (Voice over LTE) (for example, Non-patent document 1). In SPS, a base station uses a PDCCH to first notify radio resource allocation information and then, after the notification, keeps allocating radio resources periodically to a mobile station by using a fixed format. Thus, notification of the allocation information through the PDCCH is no longer required.

### PRIOR ART DOCUMENT

### NON-PATENT DOCUMENT

Non-patent document 1: 3GPP TS 36.300 V10.3.0, 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10), March 2011.

### SUMMARY OF THE INVENTION

However, Semi-persistent scheduling (SPS) described above has the following problem. Specifically, in the LTE, SPS is not prescribed as an essential function, and thus some mobile stations might not support SPS. In view of such a situation, there is no choice but to use the conventional Dynamic scheduling which uses the PDCCH to notify a mobile station of radio resource allocation information in each sub-frame. In Dynamic scheduling, as described above, the resources of the PDCCH can be used up even though the PDSCH has plenty of resources. For this reason, it is considered to use a mechanism called Delay packing.

In Delay packing, overhead of a PDCCH is reduced by collectively transmitting multiple packets related to a voice call. For example, the overhead of the PDCCH can be reduced by half by transmitting two packets at the same time.

However, in such situations as a sudden increase in voice calls, for example, in an event of disaster, there is fear that a sufficient number of voice calls cannot be handled even with the use of such Delay packing.

Therefore, the present invention has been made in view of the foregoing problem, and has an objective to a base station and a radio communication method, whereby even when the number of voice calls suddenly increases in an event such as a disaster, the number of voice calls processable can be quickly increased from the number during normal time.

A base station (base station 100) according the first feature configured to allocate a physical shared channel (PDSCH) to a mobile station (mobile station 200A, 200B) handling a voice call and notify the mobile station of allocation information by using a physical control channel (PDCCH), the allocation information indicating that the physical shared channel is allocated to the mobile station, includes: a parameter control unit (parameter control unit 103) configured to select either a normal control parameter used during normal time or an emergency control parameter used during an emergency where the number of voice calls to be handled increases from the number during normal time; and a scheduling unit (scheduling unit 105) configured to schedule the physical shared channel for a mobile station based on either the normal control parameter or the emergency control parameter selected by the parameter control unit. The normal and emergency control parameters allow the number of voice calls handleable by the base station to change, and the emergency control parameter increases the number of processable voice calls to a larger number than that of the normal control parameter.

A radio communication method of a radio communication system according the second feature, the method allocating a physical shared channel to a mobile station handling a voice call and notifying the mobile station of allocation information by using a physical control channel, the allocation information indicating that the physical shared channel is allocated to the mobile station, the method includes the steps, executed by the radio communication system, of: selecting either a normal control parameter used during normal time or an emergency control parameter used during an emergency where the number of voice calls to be handled increases from the number during normal time; and scheduling the physical shared channel for a mobile station based on either the normal control parameter or the emergency control parameter selected in the selecting step. The normal and emergency control parameters allow the number of voice calls processable by the base station to change, and the emergency control parameter increases the number of processable voice calls to a larger number than that of the normal control parameter.

## BRIEF DESCRIPTION OF THE DRAWINGS

[Fig. 1] Fig. 1 is an overall schematic configuration diagram of a radio communication system according to an embodiment of the present invention.

[Fig. 2] Fig. 2 is a functional block configuration diagram of a base station 100 according to the embodiment of the present invention.

[Fig. 3] Fig. 3 is a flowchart showing a control parameter change operation flow (No. 1) in the base station 100 according to the embodiment of the present invention.

[Fig. 4] Fig. 4 is a flowchart showing a control parameter change operation flow (No. 2) in the base station 100 according to the embodiment of the present invention.

[Fig. 5] Fig. 5 is a flowchart showing a control parameter change operation flow (No. 3) in the base station 100 according to the embodiment of the present invention.

[Fig. 6] Fig. 6 is a flowchart showing a control parameter change operation flow (No. 4) in the base station 100 according to the embodiment of the present invention.

[Fig. 7] Fig. 7 is a diagram showing an example of comparison between a packet allocation pattern of a voice call by normal Dynamic scheduling and a packet allocation pattern of a voice call by Dynamic scheduling to which Delay packing is applied.

[Fig. 8] Fig. 8 is a table showing an example of various parameters to be applied during normal time and during an emergency.

[Fig. 9] Fig. 9 is a table showing an example of parameters to be changed when the present invention is applied to an uplink scheduler.

## MODE FOR CARRYING OUT THE INVENTION

Hereinafter, embodiments of the present invention will be described. Note that, in the following description of the drawings, same or similar reference numerals denote same or similar elements and portions. In addition, it should be noted that the drawings are schematic and ratios of dimensions and the like in the drawings are different from actual ones.

Therefore, specific dimensions and the like should be determined in consideration of the following description. Moreover, as a matter of course, the drawings include portions having different dimensional relationships and ratios from each other.

(1) Overall Schematic Configuration of Radio Communication System

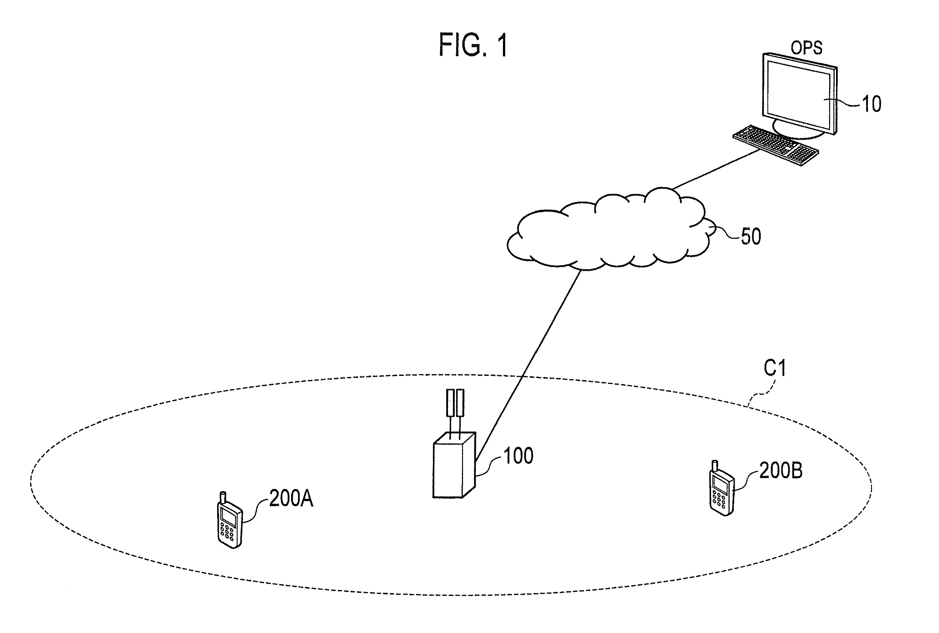

Fig. 1 is an overall schematic configuration diagram of a radio communication system according to this embodiment. As shown in Fig. 1, the radio communication system according to this embodiment adopts a Long Term Evolution (LTE) method, and includes an operation system 10, a core network 50, a base station 100 (eNB) and mobile stations 200A and 200B (UE).

The base station 100 is connected to the core network 50. The base station 100 forms a cell C1 and executes radio communication according to the mobile stations 200A and 200B and the LTE method. In the LTE method, adaptive modulation is performed between the base station 100 and the mobile station 200A. In the adaptive modulation, a data modulation method is changed according to reception quality information (CQI: channel quality indicator) to be fed back from the mobile station 200A and a block error rate of received data.

Also, in this embodiment, the base station 100 allocates a physical shared channel (PDSCH) to the mobile station 200A (or the mobile station 200B; hereinafter the same applies) handling a voice call. Then, the base station 100 uses a physical control channel (PDCCH) to notify the mobile station 200A of allocation information indicating that the physical shared channel is allocated to the mobile station 200A. Specifically, mechanisms called Dynamic scheduling and Delay packing are used. In Dynamic scheduling, radio resource allocation information is notified to the mobile station 200A for each sub-frame by using the PDCCH. Delay packing enables resources of the PDSCH to be efficiently used.

The operation system 10 is connected to the core network 50 and controls the base station 100 through the core network 50. Alternatively, the operation system 10 may control the base station 100 without the core network 50. Particularly, in this embodiment, the operation system 10 is used when an operator (telecommunications carrier) of the radio communication system executes various controls. For example, the operation system 10 is used to regulate traffic at the event of disaster such as an earthquake or to control change of a parameter such as a threshold.

Note that the operation system 10 executes such regulation or change control when a command or the like is inputted directly by the operator, or automatically executes such regulation or change control when predetermined conditions are met.

(2) Functional Block Configuration of Base Station

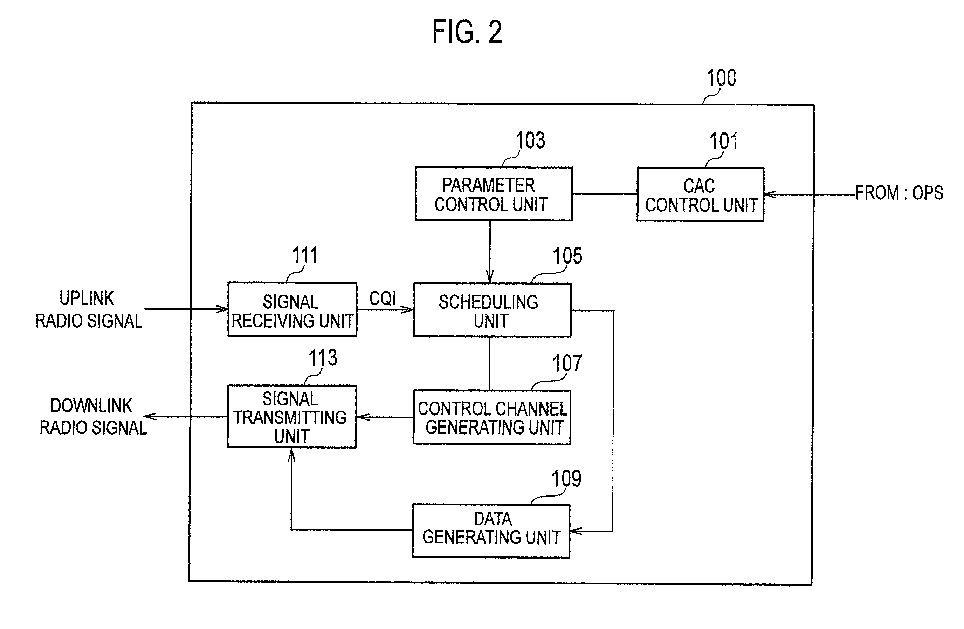

Next, description is given of a functional block configuration of the radio communication system according to this embodiment. Specifically, a functional block configuration of the base station 100 is described. Fig. 2 is a functional block configuration diagram of the base station 100.

As shown in Fig. 2, the base station 100 includes a CAC control unit 101, a parameter control unit 103, a scheduling unit 105, a control channel generating unit 107, a data generating unit 109, a signal receiving unit 111 and a signal transmitting unit 113.

The CAC control unit 101 controls parameters related to call admission control (CAC). Specifically, the CAC control unit 101 uses the following metrics, for example, to determine a threshold of CAC.

- Number of RRC connected UEs (number of connected mobile stations)
- Number of UEs holding speech bearers
- Number of resources allocated to each UE (number of individual resources, such as CQI, SR and SRS)
- Number of UEs in a Non-DRX state (non-intermittent reception state)
- Number of UEs in which an average transmission rate (kbps) of one of users or of multiple bearers is not more than a predetermined threshold
- Load factor of base station baseband (CPU utilization)
- Number of UEs corresponding to data held in a transmission buffer of the base station 100 (number of logical channels)
- Radio resource block utilization
- PDCCH resource utilization
- Average number of users multiplexed within the same sub-frame

The CAC control unit 101 uses such metrics to execute call admission control corresponding to the state of the radio communication system. Specifically, when instructed by the operation system 10 to regulate the traffic or to control change of a parameter such as a threshold, the CAC control unit 101 executes the call admission control based on the metrics as described above. These metrics may be individually used or used in combination for determination.

The parameter control unit 103 controls various parameters to be used in the base station 100. Specifically, the parameter control unit 103 selects either a normal control parameter used during normal time or an emergency control parameter used during an emergency where the number of voice calls to be handled increases from the number during normal time.

More specifically, the normal and emergency control parameters allow the number of voice calls processable by the base station 100 to change. The emergency control parameter increases the number of processable voice calls to a larger number than that of the normal control parameter. In this embodiment, the following three are used as such control parameters.

(1) parameter to control Delay packing ($Threshold_{datasize}$, $Threshold_{delay}$)
(2) Parameter to control Outer-loop ($BLER_{target}$)
(3) number of retransmissions of transmission data

As described above, in this embodiment, connection of more than the number of users (mobile stations) at which sufficient communication quality during normal time can be secured is allowed by increasing a threshold of call admission control in the CAC control unit 101. Also, in order to realize control that allows deterioration in communication quality, the parameter control unit 103 holds two kinds of control parameters, i.e., a normal control parameter and an emergency control parameter. Accordingly, the parameter control unit 103 executes scheduling of radio resources by changing the control parameter to the emergency control parameter in an event of disaster such as an earthquake.

Note that the parameter control unit 103 may switch between the normal control parameter and the emergency control parameter according to an instruction from the operation system 10. Alternatively, as described later, the parameter control unit 103 may autonomously switch between the normal control parameter and the emergency control parameter.

The scheduling unit 105 executes scheduling of radio resources to be allocated to various channels. Particularly, the scheduling unit 105 schedules a physical shared channel, specifically, a Physical Downlink Shared Channel (PDSCH) for the mobile station 200A based on the normal control parameter or the emergency control parameter selected by the parameter control unit 103.

The control channel generating unit 107 generates various physical control channels, specifically, Physical Downlink Control Channels (PDCCH) according to an instruction from the scheduling unit 105.

The data generating unit 109 generates downlink data to be transmitted to the mobile station 200A according to an instruction from the scheduling unit 105, and allocates the data to the PDSCH.

The signal receiving unit 111 receives an uplink radio signal transmitted from the mobile station 200A. The signal transmitting unit 113 transmits a downlink radio signal obtained by multiplexing a PDCCH outputted from the control channel generating unit 107 and a PDSCH outputted from the data generating unit 109.

(3) Operations of Base Station

Next, description is given of operations of the radio communication system according to this embodiment. Specifically, description is given of an operation of changing from the normal control parameter to the emergency control parameter by the base station 100.

(3.1) Operation Example 1

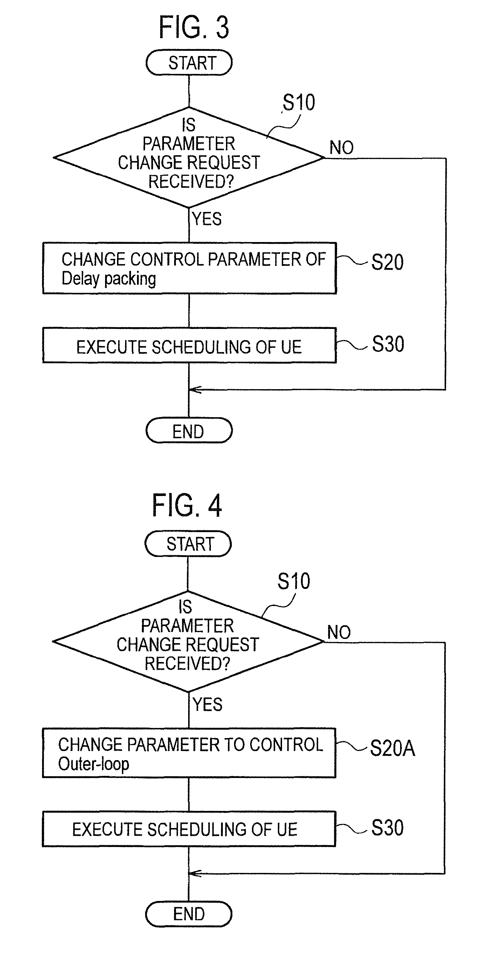

Fig. 3 shows a control parameter change operation flow (No. 1) in the base station 100. As shown in Fig. 3, the base station 100 receives a parameter change request from the operation system 10 (S10). In this operation example, upon receipt of the parameter change request, the base station 100 changes a control parameter of Delay packing (S20).

More specifically, in this operation example, the emergency control parameter specifies the number of voice call packets when the packets are collectively allocated to the PDSCH. The scheduling unit 105 in the base station 100 allocates voice call packets to the PDSCH based on the specified number of packets when the emergency control parameter is selected by the parameter control unit 103.

More specifically, as a method of realizing Delay packing, it is conceivable to perform no scheduling on the assumption that there is no transmission data until predetermined conditions are met, for example. In other words, it is assumed that there is no data when the data size is $Threshold_{datasize}$ or less. Thus, scheduling can be performed only after a certain amount of transmission data is accumulated.

Alternatively, it is assumed that there is no data when a data retention time is $Threshold_{delay}$ or less. Note that, even when packing is not possible since a data amount is too small, packets having a large delay need to be transmitted to satisfy an allowed delay time.

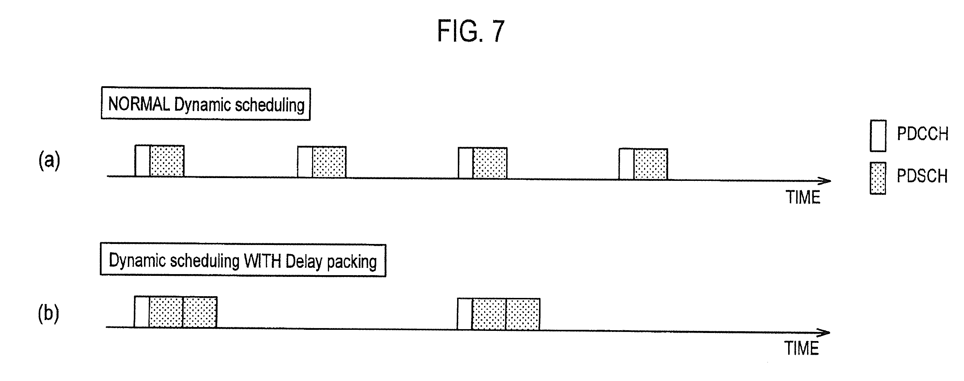

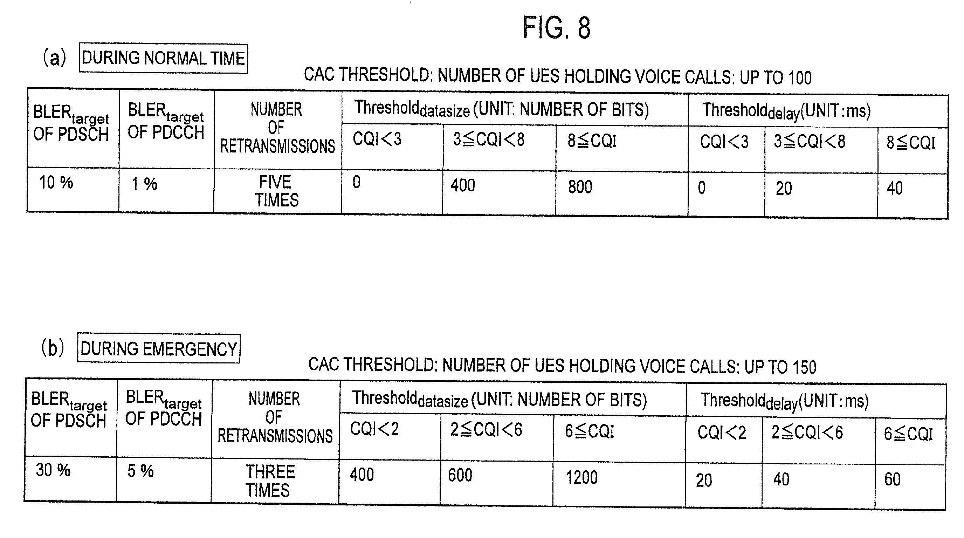

Here, Fig. 7 shows an example of comparison between a packet allocation pattern of a voice call by normal Dynamic scheduling and a packet allocation pattern of a voice call by Dynamic scheduling to which Delay packing is applied. Also, Fig. 8 shows an example of various parameters to be applied during normal time and during an emergency.

As shown in Fig. 7, in Delay packing, overhead of the PDCCH is reduced by collectively allocating multiple packets related to a voice call to the PDSCH and transmitting the packets (see Fig. 7 (b)). The voice call packets are generally generated once in 20 ms. Thus, the overhead of the PDCCH is reduced by half by transmitting the packets once in 40 ms. Accordingly, the number of voice calls to which the PDSCH can be allocated can be doubled. Note that how many packets can be collectively transmitted depends on communication quality or allowable delay of packets.

Fig. 8 (a) shows an example of various parameters to be applied during normal time, while Fig. 8 (b) shows an example of various parameters to be applied during an emergency. During normal time, as shown in Fig. 8 (a), a CAC threshold is applied assuming that the number of mobile stations (UEs) holding voice calls is 100. During an emergency, on the other hand, as shown in Fig. 8 (b), a CAC threshold is applied assuming that the number of mobile stations (UEs) holding voice calls is 150.

Also, as parameters for scheduling, $Threshold_{datasize}$ and $Threshold_{delay}$ are used. Note that other parameters shown in Fig. 8 are described later. In Delay packing, a size of data to be transmitted at a time is increased. Thus, mobile stations having better communication quality can collectively transmit more packets. Therefore, it is conceivable that how many packets are to be collectively transmitted is determined by CQI that is reception quality information fed back from the mobile station.

In the examples shown in Figs. 8 (a) and 8 (b), $Threshold_{datasize}$ and $Threshold_{delay}$ are set to change according to a value (level) of CQI. Note that switch between $Threshold_{datasize}$ and $Threshold_{delay}$ may be based on an instantaneous value of CQI or may be based on an average value of CQI over a predetermined period of time.

Next, as shown in Fig. 3, the base station 100 executes scheduling of radio resources related to the mobile station, based on the changed control parameter (S30).

(3.2) Operation Example 2

Fig. 4 shows a control parameter change operation flow (No. 2) in the base station 100. Differences from the above operation example 1 are mainly described below.

In this operation example, the emergency control parameter specifies an offset based on a block error rate of the PDSCH. When the emergency control parameter is selected by the parameter control unit 103, the scheduling unit 105 in the base station 100 changes a modulation method between the base station 100 and the mobile station 200A based on received channel quality of the mobile station having the offset added thereto (S20A).

Specifically, CQI is used not only for parameter adjustment in Delay packing but also for link adaptation such as adaptive modulation and demodulation. The CQI value may deviate from communication quality that enables normal communication through an actually set channel (communication path) due to SIR estimate accurate of the mobile station, a propagation environment, and the like.

Therefore, in order to guarantee the accuracy of CQI report from the mobile station, it is conceivable to adjust the CQI value by adding CQI_offset obtained by Outer-loop control. The CQI_offset obtained by Outer-loop control is calculated as below with a delivery confirmation result (Ack, Nack and DTX (intermittent transmission)) of the PDSCH.

[Formula 1]

$$CQI\_offset = \begin{cases} CQI\_offset + \Delta_{adj} \times BLER_{target} & Input = "Ack" \\ CQI\_offset - \Delta_{adj} \times (1 - BLER_{target}) & Input = "Nack" \\ CQI\_offset & Input = "DTX" \end{cases}$$

When an uplink control channel (PUCCH) or an uplink shared data channel is allocated at the same timing, the base station 100 receives the delivery confirmation result of the PDSCH through the uplink shared data channel, and executes the above calculation based on the received result. $BLER_{target}$ is a parameter, and BLER is a block error rate of a target PDSCH. $\Delta_{adj}$ is a step width to adjust the offset.

Also for the PDCCH, the base station 100 can perform the following calculation with a delivery confirmation result of the PDCCH.

[Formula 2]

$$CQI\_offset = \begin{cases} CQI\_offset + \Delta_{adj} \times BLER_{target} & Input = "Ack" \\ CQI\_offset + \Delta_{adj} \times BLER_{target} & Input = "Nack" \\ CQI\_offset - \Delta_{adj} \times (1 - BLER_{target}) & Input = "DTX" \end{cases}$$

Note that the values of $\Delta_{adj}$ and $BLER_{target}$ may vary according to required communication quality between the PDCCH and the PDSCH. As shown in Figs. 8 (a) and 8 (b), for example, the value of $BLER_{target}$ may vary between the PDCCH and the PDSCH.

(3.3) Operation Example 3

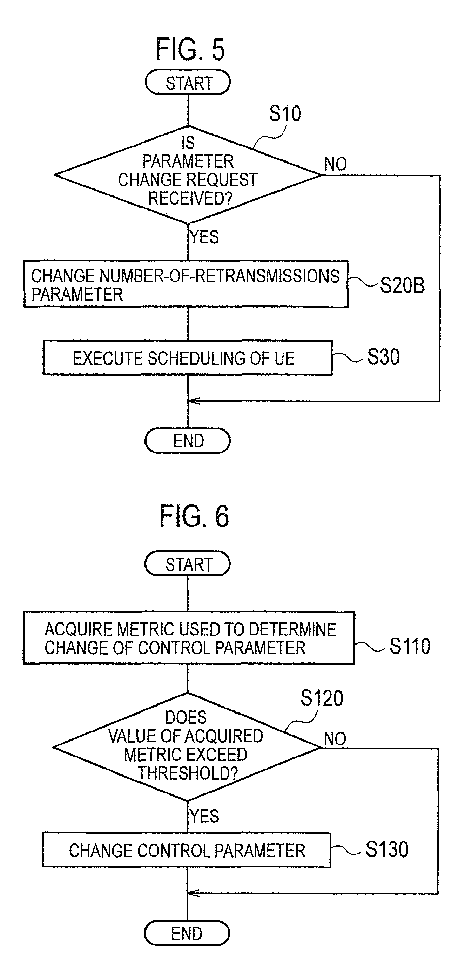

Fig. 5 shows a control parameter change operation flow (No. 3) in the base station 100. In this operation example, the emergency control parameter specifies the number of retransmissions of data to be transmitted using the PDSCH. In this operation example, when the emergency control parameter is selected by the parameter control unit 103, the data generating unit 109 in the base station 100 configures a data retransmitting unit to retransmit the data to be transmitted using the PDSCH based on the number of retransmissions of the data.
Upon receipt of a parameter change request, the base station 100 changes a number-of-retransmissions parameter (S20B). During an emergency as shown in Figs. 8 (a) and 8 (b), for example, an allowable number of retransmissions is smaller than that during normal time. As a result, packets related to more voice calls can be transmitted through the PDSCH.

(3.4) Operation Example 4

Fig. 6 shows a control parameter change operation flow (No. 4) in the base station 100. In the operation example 4, the base station 100 autonomously changes from the normal control parameter to the emergency control parameter.
As shown in Fig. 6, the base station 100 uses the following metrics, for example, to determine whether to autonomously change from the normal control parameter to the emergency control parameter (S110 and S120).
- Number of UEs in RRC connected state
- Number of UEs holding speech bearers
- Number of UEs corresponding to speech data held in a transmission buffer of the base station 100
- Number of resources allocated to each UE (number of individual resources, such as CQI, SR and SRS)
- Number of UEs in a Non-DRX state (non-intermittent reception state)
- Number of UEs in which an average transmission rate (kbps) of one of users or of multiple bearers is not more than a predetermined threshold
- Load factor of base station baseband (CPU utilization)
- Radio resource block utilization
- PDCCH resource utilization
- Average number of users multiplexed within the same sub-frame

In this operation example, as described above, the parameter control unit 103 in the base station 100 calculates each of the metrics described above and can select the emergency control parameter when the metric exceeds a predetermined threshold.
Note that, for such parameter change control, an instantaneous value upon acquisition with a constant period or an average value over a predetermined period of time may be used. Moreover, the number of stages of the parameters is not only two as shown in Figs. 8 (a) and 8 (b) but may be three or more. Furthermore, the metrics to be used for determination described above may be individually used or used in combination for determination.

(4) Advantageous Effects

According to the base station 100, the parameter control unit 103 selects either the normal control parameter or the emergency control parameter used during an emergency where the number of voice calls increases. The scheduling unit 105 schedules the PDSCH for the mobile station 200A based on the emergency control parameter selected by the parameter control unit 103. The normal and emergency control parameters allow the number of voice calls processable by the base station 100 to change. The emergency control parameter increases the number of processable voice calls to a larger number than that of the normal control parameter.
Thus, even when the number of voice calls suddenly increases in an event such as a disaster, the number of voice calls processable can be quickly increased from the number during normal time.
Particularly, in this embodiment, the use of Delay packing allows more voice calls than the normal Dynamic scheduling. However, since a great number of voice calls are expected to be made in an event of disaster, the application of delay packing may not be enough. In order to enable simultaneous communication among many users (mobile stations) at the event of disaster as described above, it is effective to reduce the amount of radio resources to be allocated to each user by temporarily lowering the communication quality of voice calls.
In this embodiment, the parameter change as described above increases the number of voice calls while lowering the communication quality of the voice calls within an allowable range, thereby enabling more users to communicate even in the event of disaster.

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

For example, in the above embodiment, the description has been given of the example assuming the scheduler adopting Delay packing. However, the scope of application of the present invention is not limited to the scheduler using Delay packing. Even when no Delay packing is used, the number of voice calls can be increased by changing the parameter such as the number of retransmissions or $BLER_{target}$.

Moreover, in the above embodiment, the description has been given mainly of the downlink scheduler. However, the present invention is not limited to the downlink but similarly applicable to an uplink.

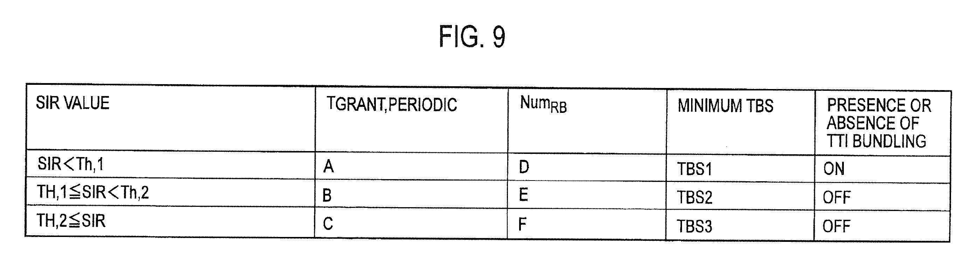

Fig. 9 shows an example of parameters to be changed when the present invention is applied to an uplink scheduler. In the case of the uplink, SIR may be measured based on Sounding RS (SRS), Demodulation RS or the like, and radio resources may be periodically allocated based on the measured SIR.

For example, scheduling using the following parameters may be executed based on the measured SIR (instantaneous value or average value).

- PDCCH allocation cycle (Tgrant, periodic)
- Number (NumRB) of radio resource blocks (RB)
- Minimum TBS
- Presence or absence of TTI bundling

Note that in the case of the uplink, RB may be limited by restrictions on transmission power. Therefore, in order to prevent an excessive division loss, it is efficient to specify the minimum number of RBs or TBS beforehand. Moreover, parameters to be temporarily changed during an emergency or the like may include $BLER_{target}$ of the PUSCH and the number of retransmissions.

As described above, the present invention naturally includes various embodiments which are not described herein. Accordingly, the technical scope of the present invention should be determined only by the matters to define the invention in the scope of claims regarded as appropriate based on the description.

Note that the entire content of Japanese Patent Application No. 2011-183025 (filed on August 24, 2011) is incorporated by reference in the present specification.

## INDUSTRIAL APPLICABILITY

According to the features of the present invention, a base station and a radio communication method can be provided, whereby even when the number of voice calls suddenly increases, in an event such as a disaster, the number of voice calls processable can be quickly increased from the number during normal time.

## EXPLANATION OF THE REFERENCE NUMERALS

| | |
|---|---|
| 10 | operation system |
| 50 | core network |
| 100 | base station |
| 101 | CAC control unit |
| 103 | parameter control unit |
| 105 | scheduling unit |
| 107 | control channel generating unit |
| 109 | data generating unit |
| 111 | signal receiving unit |
| 113 | signal transmitting unit |
| 200A, 200B | mobile station |
| C1 | cell |

**Claims**

1. A base station configured to allocate a physical shared channel to a mobile station handling a voice call and notify the mobile station of allocation information by using a physical control channel, the allocation information indicating that the physical shared channel is allocated to the mobile station, comprising:

    a parameter control unit configured to select either a normal control parameter used during normal time or an emergency control parameter used during an emergency where the number of voice calls to be handled increases from the number during normal time; and
    a scheduling unit configured to schedule the physical shared channel for a mobile station based on either the normal control parameter or the emergency control parameter selected by the parameter control unit, wherein the normal and emergency control parameters allow the number of voice calls processable by the base station to change, and
    the emergency control parameter increases the number of processable voice calls to a larger number than that of the normal control parameter.

2. The base station according to claim 1, wherein
    the emergency control parameter specifies the number of packets of the voice calls when the packets are collectively allocated to the physical shared channel, and
    the scheduling unit allocates the packets of the voice calls to the physical shared channel based on the specified number of packets, when the emergency control parameter is selected by the parameter control unit.

3. The base station according to claim 1, wherein adaptive modulation to change a data modulation method based on a block error rate of received data is used between the base station and the mobile station,
    the emergency control parameter specifies an offset based on a block error rate of the physical shared channel, and
    the scheduling unit changes the modulation method based on received channel quality of the mobile station, to which the offset is added, when the emergency control parameter is selected by the parameter control unit.

4. The base station according to claim 1, wherein
    the emergency control parameter specifies the number of retransmissions of data to be transmitted using the physical shared channel, and
    the base station further comprises a data retransmitting unit configured to retransmit the data based on the specified number of retransmissions when the emergency control parameter is selected by the parameter control unit.

5. The base station according to claim 1, wherein
    the parameter control unit acquires a metric indicating a state of the base station, and selects the emergency control parameter when the acquired metric exceeds a predetermined threshold.

6. A radio communication method of a radio communication system, the method allocating a physical shared channel to a mobile station handling a voice call and notifying the mobile station of allocation information by using a physical control channel, the allocation information indicating that the physical shared channel is allocated to the mobile station, the method comprising the steps, executed by the radio communication system, of:

    selecting either a normal control parameter used during normal time or an emergency control parameter used during an emergency where the number of voice calls to be handled increases from the number during normal time; and
    scheduling the physical shared channel for a mobile station based on either the normal control parameter or the emergency control parameter selected in the selecting step, wherein
    the normal and emergency control parameters allow the number of voice calls processable by the base station to change, and
    the emergency control parameter increases the number of processable voice calls to a larger number than that of the normal control parameter.

FIG. 1

EP 2 750 469 A1

# FIG. 2

EP 2 750 469 A1

## FIG. 3

START

S10
IS PARAMETER CHANGE REQUEST RECEIVED? — NO

YES

CHANGE CONTROL PARAMETER OF Delay packing — S20

EXECUTE SCHEDULING OF UE — S30

END

## FIG. 4

START

S10
IS PARAMETER CHANGE REQUEST RECEIVED? — NO

YES

CHANGE PARAMETER TO CONTROL Outer-loop — S20A

EXECUTE SCHEDULING OF UE — S30

END

## FIG. 5

START

IS PARAMETER CHANGE REQUEST RECEIVED? — S10

NO

YES

CHANGE NUMBER-OF-RETRANSMISSIONS PARAMETER — S20B

EXECUTE SCHEDULING OF UE — S30

END

## FIG. 6

START

ACQUIRE METRIC USED TO DETERMINE CHANGE OF CONTROL PARAMETER — S110

DOES VALUE OF ACQUIRED METRIC EXCEED THRESHOLD? — S120

NO

YES

CHANGE CONTROL PARAMETER — S130

END

# FIG. 7

**NORMAL Dynamic scheduling**

(a)

□ PDCCH

▨ PDSCH

TIME

**Dynamic scheduling WITH Delay packing**

(b)

TIME

# FIG. 8

## (a) DURING NORMAL TIME

CAC THRESHOLD: NUMBER OF UES HOLDING VOICE CALLS: UP TO 100

| $BLER_{target}$ OF PDSCH | $BLER_{target}$ OF PDCCH | NUMBER OF RETRANSMISSIONS | $Threshold_{datasize}$ (UNIT: NUMBER OF BITS) | | | $Threshold_{delay}$(UNIT:ms) | | |
|---|---|---|---|---|---|---|---|---|
| | | | CQI<3 | 3≦CQI<8 | 8≦CQI | CQI<3 | 3≦CQI<8 | 8≦CQI |
| 10 % | 1 % | FIVE TIMES | 0 | 400 | 800 | 0 | 20 | 40 |

## (b) DURING EMERGENCY

CAC THRESHOLD: NUMBER OF UES HOLDING VOICE CALLS: UP TO 150

| $BLER_{target}$ OF PDSCH | $BLER_{target}$ OF PDCCH | NUMBER OF RETRANSMISSIONS | $Threshold_{datasize}$ (UNIT: NUMBER OF BITS) | | | $Threshold_{delay}$(UNIT:ms) | | |
|---|---|---|---|---|---|---|---|---|
| | | | CQI<2 | 2≦CQI<6 | 6≦CQI | CQI<2 | 2≦CQI<6 | 6≦CQI |
| 30 % | 5 % | THREE TIMES | 400 | 600 | 1200 | 20 | 40 | 60 |

EP 2 750 469 A1

FIG. 9

| SIR VALUE | TGRANT,PERIODIC | Num$_{RB}$ | MINIMUM TBS | PRESENCE OR ABSENCE OF TTI BUNDLING |
|---|---|---|---|---|
| SIR<Th,1 | A | D | TBS1 | ON |
| TH,1≦SIR<Th,2 | B | E | TBS2 | OFF |
| TH,2≦SIR | C | F | TBS3 | OFF |

EP 2 750 469 A1

## INTERNATIONAL SEARCH REPORT

| | International application No. |
|---|---|
| | PCT/JP2012/071053 |

**A. CLASSIFICATION OF SUBJECT MATTER**
*H04W72/12(2009.01)i, H04W72/04(2009.01)i*

According to International Patent Classification (IPC) or to both national classification and IPC

**B. FIELDS SEARCHED**

Minimum documentation searched (classification system followed by classification symbols)
H04W72/12, H04W72/04

Documentation searched other than minimum documentation to the extent that such documents are included in the fields searched
Jitsuyo Shinan Koho        1922-1996   Jitsuyo Shinan Toroku Koho   1996-2012
Kokai Jitsuyo Shinan Koho  1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2008/156064 A1  (NTT Docomo Inc.),<br>24 December 2008 (24.12.2008),<br>paragraphs [0005] to [0015]<br>& US 2010/0220652 A1    & EP 2169856 A1<br>& CN 101731018 A | 1,5,6<br>2-4 |
| Y<br>A | WO 2009/050811 A1  (Hitachi Communication<br>Technology Co., Ltd.),<br>23 April 2009 (23.04.2009),<br>paragraph [0027]<br>(Family: none) | 1,5,6<br>2-4 |

☐  Further documents are listed in the continuation of Box C.        ☐  See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 08 November, 2012 (08.11.12) | 20 November, 2012 (20.11.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• JP 2011183025 A

### Non-patent literature cited in the description

• 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10). *3GPP TS 36.300,* March 2011